# EUROPÄISCHE PATENTSCHRIFT

(11) **EP 1 241 061 B1**
(45) Veröffentlichungstag und Bekanntmachung des Hinweises auf die Patenterteilung: **13.10.2004**
(21) Anmeldenummer: 02003940.0
(22) Anmeldetag: 22.02.2002
(51) Int. Cl.: B60R 25/00, B60R 16/02, G06F 1/00, G06F 13/36, G06F 13/38, H04M 1/60

(54) **Autorisierungsverfahren für die Kommunikation mit einem Datenbus**
Authorisation method for communication with a data bus
Procédé d'autorisation pour la communication avec un bus de donnée

(30) Priorität: 16.03.2001 DE 10112699
(43) Veröffentlichungstag der Anmeldung: 18.09.2002
(73) Patentinhaber: DaimlerChrysler AG, 70567 Stuttgart (DE)
(72) Erfinder: Krumrein, Rainer, 71522 Backnang (DE)

(56) Entgegenhaltungen:
- EP-A- 0 899 161
- WO-A-00/09363
- WO-A-98/35857
- DE-A- 3 739 670
- DE-A- 10 022 422
- DE-A- 19 840 484

## Beschreibung

Die Erfindung betrifft ein Verfahren zur Autorisierung von wahlweise an einen Datenbus ankoppelbaren, externen Geräten und einen zur Durchführung des Verfahrens geeigneten Datenbus.

Aus der DE 198 53 000 A1 ist ein Verfahren und eine Anordnung zum Versorgen von Kraftfahrzeugen mit Daten bekannt. Die Daten werden zum Betrieb von Regelungs- und Steuersystemen verwendet. Mit Hilfe einer drahtlosen Datenübertragungseinrichtung zwischen Fahrzeug und einer Zentrale ist gewährleistet, dass Daten übertragen, abgefragt oder ausgetauscht werden können. Diese Daten werden zum Betrieb, zur Überwachung, zur Aktualisierung und zur technischen Diagnose bzw. Analyse wie z.B. des Bremssystems, des Fahrwerks, der Luftdruck der einzelnen Räder etc. herangezogen. Der Schwerpunkt dieses Verfahrens liegt in der Telediagnose, das heißt in der drahtlosen Übermittlung von Überwachungsdaten, die in regelmäßigen Zeitabständen von der Zentrale erfasst werden. Dieses Verfahren beschränkt sich ausschließlich auf die Kommunikation mit einer Zentrale.

Aus der DE 195 80 642 C2 ist ein Verfahren zum Autorisieren einer Basisstation und ein Verfahren zur Authentifikation einer Basisstation bekannt. Das dort beschriebene Verfahren bezieht sich allgemein auf tragbare Telefone, sowie insbesondere auf das Gültigmachen einer Kommunikationsverbindung zwischen einer Kommunikationsvorrichtung und einer Autorisiervorrichtung. Das Verfahren umfasst folgende Schritte: Authentifizierung der Basisstation gegenüber der Autorisiervorrichtung; Authentifizieren der Autorisiervorrichtung gegenüber der Basisstation; Gültigmachen der Kommunikationsverbindung zwischen der Basisstation und der Autorisiervorrichtung, wenn die Basisstation und die Autorisiervorrichtung authentifiziert wurden. Dieses Verfahren ist ausschließlich in Zusammenhang mit Mobilfunksystemen beschrieben.

Au der WO-A-9835857 ist ein Sicherheitsbauteil für Diagnoseanschlüsse in verteilten Computernetzwerken bekannt. Mittels des Diagnoseanschlusses kann ein externes Diagnosegerät auf das Netzwerk zugreifen, sofern das externe Diagnosegerät von dem Sicherheitsbauteil zum Zugang autorisiert wurde.

Der Erfindung liegt die Aufgabe zu Grunde, ein Verfahren zur Autorisierung derart weiterzubilden, dass es zur wahlweisen Ankopplung externer Geräte an einen Datenbus geeignet ist. Ferner wird ein Datenbus derart weiterentwickelt, dass bei der Ankopplung ein Autorisierungsverfahren durchführbar ist.

Diese Aufgabe wird erfindungsgemäß durch die Merkmale des Verfahrens nach Anspruch 1 gelöst. Danach wird das Ergebnis der Prüfung als Autorisierungsinformation bereitgestellt. Die Steuerinformationen für die externen Geräte werden vom Benutzer über eine Benutzerschnittstelle eingegeben und zusätzlich werden Erkennungsinformationen zur Autorisierung der extern, ankoppelbaren Geräte mittels der Benutzerschnittstelle eingegeben.

Das Autorisierungssystem muss bei positiver Autorisierungsinformation mittels der Kommunikationsschnittstelle die Kommunikation zum extern ankoppelbaren Gerät zulassen, so dass alle an dem Datenbus angebundenen Komponenten, insbesondere die Benutzerschnittstelle, über den Datenbus Daten mit dem wahlweise ankoppelbaren, externen Gerät austauschen kann. Bei negativer Autorisierungsinformation des Autorisierungssystem verweigert dieses die Kommunikationsverbindung oder im Falle einer bereits bestehenden Verbindung wird die Verbindung beendet. Des Weiteren stellt das Autorisierungssystem den Status der Verbindung als Verbindungsinformation bereit, so dass dieser in einem Display im Fahrzeug oder auf einem Wartungsrechner angezeigt werden kann.

Die Erkennungsinformationen, die Autorisierungsinformationen und die Verbindungsinformationen der wahlweise ankoppelbaren, externen Geräte werden von einem dem Datenbus zugeordneten Autorisierungssystem in einem Speichermittel gespeichert und bei Änderung aktualisiert.

Bei Änderungen der Erkennungsinformation für externe Geräte muss das Autorisierungssystem eine erneute Überprüfung der Autorisierung und der Verbindung durchführen, um z.B. die Möglichkeit zu besitzen, einer bereits autorisierten Verbindung die Autorisierung zu entziehen.

Das erfindungsgemäße Verfahren lässt sich vorteilhaft bei der Ankopplung von externen Geräten an die Kommunikationsschnittstelle einsetzen, wobei dabei eine drahtlose Datenübertragung vorgesehen ist.

Aus Sicherheitsgründen kann es notwendig sein, dass die Kommunikation zwischen der Kommunikationsschnittstelle und den externen Geräten verschlüsselt erfolgt. Dies betrifft insbesondere die Verschlüsselung der Erkennungsinformation, da mit Kenntnis dieser Information der Zugang zum Datenbus und zu den am Datenbus angebundenen Komponenten ermöglicht wird.

Ferner wird die Aufgabe erfindungsgemäß durch einen Datenbus nach Anspruch 8 gelöst. Danach weist der Datenbus ein Autorisierungssystem auf, welches aufgrund der ihm bekannt gemachten Erkennungsinformation für das wahlweise ankoppelbare, externe Gerät und den vom externen Gerät übertragenen Erkennungsinformationen auswertet, ob eine Datenkommunikation zu Stande kommen soll.

Das Autorisierungssystem baut in Abhängigkeit der Auswertung der Erkennungsinformationen mittels der Kommunikationsschnittstelle die Verbindung zum wahlweise ankoppelbaren, externen Gerät auf oder beendet diese.

Bei einer Weiterbildung der Erfindung vergleicht das Autorisierungssystem die von einem externen Gerät an die Kommunikationsschnittstelle übertragene Erkennungsinformation, insbesondere ein Passwort, mit der in einem Speichermittel abgelegten Erkennungsinformation, insbesondere mit dem Passwort für das externe Gerät. Bei Übereinstimmung autorisiert das Autorisierungssystem die Verbindung.

Es gibt nun verschiedene Möglichkeiten, die Lehre der vorliegenden Erfindung in vorteilhafter Weise weiterzubilden. Dazu ist einerseits auf die untergeordneten Ansprüche und andererseits auf die nachfolgende Erläuterung zum Verfahren und dem erfindungsgemäßen Datenbus zu verweisen. In der Zeichnung ist eine Variante des erfindungsgemäßen Verfahrens dargestellt. Es zeigen in schematischer Darstellung,

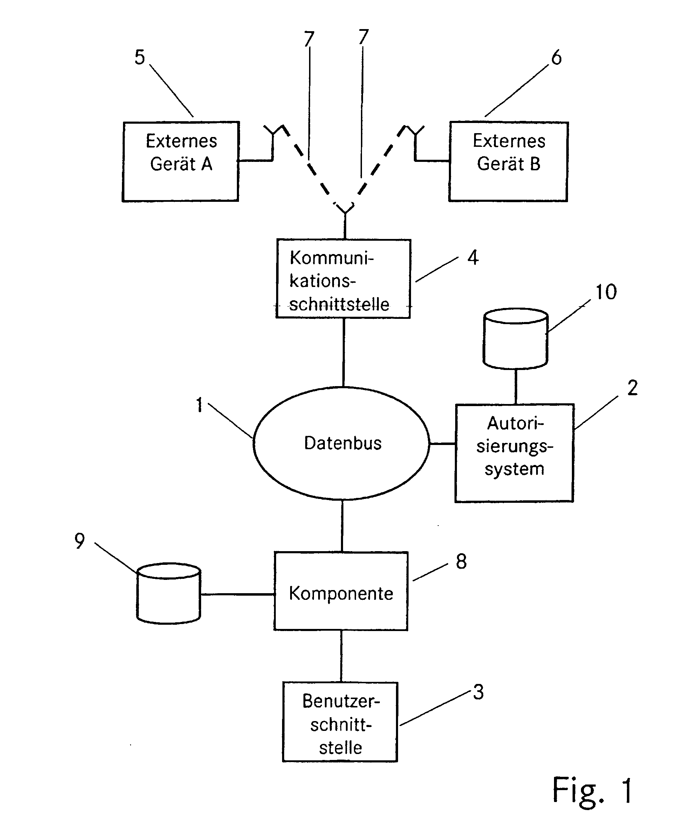

- Fig.1: einen Datenbus zur Durchführung des erfindungsgemäßen Verfahrens,
- Fig.2: eine Darstellung von bei dem erfindungsgemäßen Verfahren in einem Speichermittel abgelegten Daten, aufgrund der eine Autorisierung durchführbar ist,
- Fig.3: eine Darstellung von Daten, die bei dem erfindungsgemäßen Autorisierungsverfahren zur Individualisierung der wahlweise an den Datenbus angeschlossenen Geräte in einem Speichermittel abgelegt werden.

Ein Datenbus 1 ist mit einem Autorisierungssystem 2, mit einer Benutzerschnittstelle 3 und einer Kommunikationsschnittstelle 4 verbunden. Vorhandene wahlweise ankoppelbare, externe Geräte 5,6 können über eine drahtlose Datenübertragungsverbindung 7 eine Kommunikation zur Kommunikationsschnittstelle 4 aufbauen.

Der Datenbus 1 kann als optischer MOST- oder D2B-Bus oder als elektrischer CAN-Bus in einem Verkehrsmittel, insbesondere einem Kraftfahrzeug, vorgesehen sein. Die Benutzerschnittstelle 3 kann als Display in einem Fahrzeug-Armaturenbrett ausgebildet sein und mit einer Komponente 8 mit Mikrorechner und Speichermittel 9 verbunden sein, um eine Datenverarbeitung durchzuführen.

Das Autorisierungssystem 2 kann als Steuergerät mit einem Speichermittel 10 ausgeführt sein, um die für das Verfahren notwendigen Systemfunktionen zu erfüllen und die Erkennungs- und Statusinformationen der Ankopplung zu den extern ankoppelbaren Geräten 5,6 zu speichern.

Zur direkteren Kommunikation mit der Benutzerschnittstelle 3, kann das Autorisierungssystem 2 auch funktional mit der Komponente 8 zusammengelegt sein, so dass der Datenaustausch zwischen Benutzerschnittstelle 3 und Autorisierungssystem 2 nicht über den Datenbus 1 erfolgen muss.

Die Kommunikationsschnittstelle 4 ist als mit dem Datenbus 1 elektrisch verbundenes Steuergerät ausgebildet, das eine drahtlose Datenübertragung mit den extern ankoppelbaren Geräten 5, 6 bereitstellt. Der Verbindungsaufbau erfolgt mittels drahtloser Datenübertragung 7, entsprechend den Bluetooth-, GSM- oder ähnlichen Standards. Die Kommunikationsschnittstelle 4 gibt die vom externen Gerät 5 oder 6 gesendeten Erkennungsinformationen an den Datenbus 1 weiter. Das am Datenbus 1 angebundene Autorisierungssystem 2 vergleicht diese mit den im Speichermittel 10 abgelegten Erkennungsinformationen. Bei Gleichheit der Erkennungsinformationen und damit positiver Autorisierung initiiert das Autorisierungssystem 2 über die Kommunikationsschnittstelle 4 die Ankopplung des externen Geräts 5 oder 6 an den Datenbus 1.

Ankoppelbare externe Geräte 5, 6 sind mobile Telefone, Laptops, mobile persönliche digitale Assistenten, Kopfhörer, usw. Diese Geräte 5, 6 senden Erkennungsinformationen an die Kommunikationsschnittstelle 4 des Datenbusses 1, um den Verbindungsaufbau zu initiieren. Bei erfolgter Autorisierung können die extern ankoppelbaren Geräte 5, 6, bei Bedarf, mit jedem Gerät, das direkt mit dem Datenbus 1 verbunden ist, kommunizieren. Beispielsweise kann ein mobiles Telefon mit einer Freisprechanlage am Datenbus 1 Kommunikationsdaten, bspw. Sprachdaten, austauschen. Des Weiteren kann bspw. ein Laptop ein an den Datenbus angebundenes Telefon als Modem benutzen oder Daten mit den an den Datenbus angebundenen Komponenten, wie Navigationssystem, etc. austauschen.

Die Benutzerschnittstelle 3 dient zur Ausgabe von optischen Daten sowie zur Ein- und Ausgabe von Steuerinformationen des Benutzers. Insbesondere ermöglicht die Benutzerschnittstelle 3 die Eingabe von Erkennungsinformationen für extern ankoppelbare Geräte 5, 6 sowie die Anzeige von Statusinformationen bezüglich der Autorisierung und der Verbindung zu diesen Geräten.

Die Erkennungsinformation enthält mindestens eine Gerätekennung des externen Geräts 5 oder 6 und ein dem externen Gerät 5 oder 6 zugeordnetes Passwort. Der Autorisierungsstatus informiert, ob dieses externe Gerät 5 oder 6 autorisiert ist, eine Kommunikationsverbindung zum Datenbus 1 aufzubauen, d.h. ob die Erkennungsinformation für das externes Gerät 5 oder 6 im Datenspeicher des Autorisierungssystem 2 abgelegt und eine Verbindung bereits einmal vom Autorisierungssystem 2 autorisiert wurde. Der Verbindungsstatus gibt an, ob momentan eine Verbindung zum externen Gerät 5 oder 6 existiert.

Das Autorisierungssystem 2 speichert in einem Datenspeicher 10 die Erkennungsinformation, den Status der Autorisierung und den Status der Verbindung zum extern ankoppelbaren Gerät 5, 6. Zur Speicherung dieser Daten legt das Autorisierungssystem 2 eine Liste, fortan als Geräteliste bezeichnet, auf der Grundlage der externen Gerätekennungen sowie den korrespondierenden Statusinformationen an. Einmal vom Autorisierungssystem 2 autorisierte externe Geräte 5, 6 werden nicht mehr aus der Geräteliste gelöscht, auch wenn momentan keine Verbindung verfügbar ist.

Das Autorisierungssystem 2 überprüft, ob die vom externen Gerät 5 oder 6 an die Kommunikationsschnittstelle 4 gesendeten Erkennungsinformation mit der ihm bereits bekannt gemachten bzw. über die Benutzerschnittstelle 3 angeforderten Erkennungsinformation übereinstimmt. Sobald dem Autorisierungssystem 2 die Erkennungsinformation eines externen Geräts 5 oder 6 mitgeteilt wurde, wird diese im Datenspeicher des Autorisierungssystems 2 abgelegt. Ist dem Autorisierungssystem 2 keine Erkennungsinformation für das sendende externe Gerät 5 oder 6 zugänglich, so wird dieses externe Gerät 5 oder 6 in der Geräteliste mit dem Status nicht autorisiert und nicht verbunden abgelegt.

Ist die Übereinstimmung zwischen gesendeter und dem Autorisierungssystem 2 bekannter Erkennungsinformation positiv, d.h. ist die gesendete Gerätekennung und Passwort mit der dem Autorisierungssystem 2 bekannt gemachten Gerätekennung und Passwort identisch, autorisiert das Autorisierungssystem 2 die Verbindung; bei negativer Übereinstimmung erfolgt keine Autorisierung. Der Status für dieses Gerät 5 oder 6 wird in der Geräteliste auf dem Datenspeicher 10 vom Autorisierungssystem 2 entsprechend auf AUTORISIERT oder NICHT AUTORISIERT aktualisiert.

Nur bei positiver Autorisierung ermöglicht das Autorisierungssystem 2 mittels der Kommunikationsschnittstelle 4 den Aufbau einer festen Verbindung zum externen Gerät. Ist der Verbindungsaufbau erfolgt, wird der Verbindungsstatus vom Autorisierungssystem 2 in der Geräteliste auf dem Datenspeicher 10 auf VERBUNDEN aktualisiert. Damit hat das externe Gerät 5 oder 6 freien Zugang zum Datenbus 1 und kann Daten mit den an den Datenbus 1 angeschlossenen Komponenten, insbesondere der Benutzerschnittstelle 3, austauschen.

Wird dem Autorisierungssystem 2 eine Änderung der Erkennungsinformation für ein externes Gerät 5 oder 6 über die Benutzerschnittstelle 3 bekannt gemacht, wird der Autorisierungsprozess für und mit den geänderten Erkennungsinformationen erneut gestartet. Bei positiver Autorisierung wird dann entweder die Verbindung aufgebaut oder aufrechterhalten, bei negativer Autorisierung wird der Verbindungsaufbau abgelehnt oder eine bereits bestehende Verbindung abgebrochen. Der Status wird in der Geräteliste entsprechend aktualisiert. Dieses Verfahren kann beispielsweise angewendet werden, wenn ein am Datenbus 1 autorisiertes Gerät 5 oder 6 die Autorisierung wieder entzogen werden soll. Hierzu wird das Passwort in der Erkennungsinformation für das entsprechende externe Gerät 5 oder 6 über die Benutzerschnittstelle 3 verändert, also z.B. auf einen leeren Eintrag gesetzt.

Beim umgekehrten Prozess befindet sich ein Autorisierungssystem in dem extern ankoppelbaren Gerät 5 oder 6 und der Datenbus 1 muss sich für den Zugriff auf dieses Gerät 5 oder 6 an diesem Gerät 5 oder 6 autorisieren lassen. Hierzu muss dem Autorisierungssystem 2 des Datenbusses 1 die Erkennungsinformation für das externe Gerät, also Gerätekennung und Passwort, bekannt gemacht werden. Die Kommunikationsschnittstelle 4 sendet beim Kommunikationsaufbau die Erkennungsinformation des Datenbusses 1 an das externe Gerät. Diese Erkennungsinformation beinhaltet eine Gerätekennung für die Kommunikationsschnittstelle 4 des Datenbusses 1 und das dem externen Gerät 5, 6 zugeordnete Passwort. Das externe Gerät 5 oder 6 empfängt die von der Kommunikationsschnittstelle 4 des Datenbusses 1 gesendeten Erkennungsinformationen und kann diese mit seinem Autorisierungssystem verifizieren. Bei erfolgreicher Autorisierung durch das extern ankoppelbare Gerät 5 oder 6, wird die Kommunikationsverbindung zugelassen. Der Status der Geräteliste muss dementsprechend aktualisiert werden. Hierbei ist zu beachten, dass das Autorisierungssystem des extern ankoppelbaren Geräts 5 oder 6, die Verbindung jederzeit beenden kann. Dies gilt insbesondere dann, wenn das Passwort für die Verbindung mit dem Datenbus 1 auf dem externen Gerät 5 oder 6 geändert wird, ohne dass diese Änderung auf dem Autorisierungssystem 2 des Datenbusses 1 ebenfalls durchgeführt wird. Das Verfahren kann angewendet werden, wenn eine Verbindung zu einem extern ankoppelbaren Gerät 5 oder 6 aufgenommen werden soll, dass noch nicht in der Geräteliste vorhanden ist. Durch das Bekanntmachen der Erkennungsinformation beim Autorisierungssystem 2 des Datenbusses 1 über die Benutzerschnittstelle 3 initiiert das Autorisierungssystem 2 den Verbindungsaufbau zum externen Gerät.

Das Autorisierungssystem 2 stellt den Inhalt der Geräteliste der Benutzerschnittstelle 3 zur Anzeige zur Verfügung. Diese Anzeige kann auf Anfrage, bei Änderungen oder zyklisch erfolgen und aktualisiert werden.

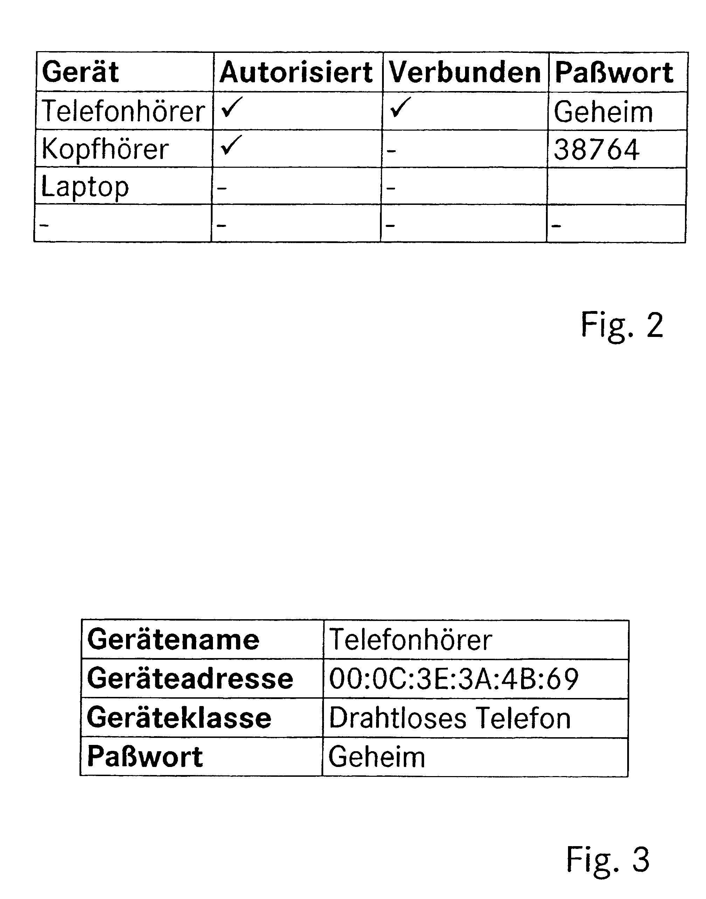

In Fig.2 ist eine Darstellung von bei dem erfindungsgemäßen Verfahren in einem Speichermittel 10 abgelegten Daten, die dem Inhalt der Geräteliste entsprechen, dargestellt. Die Information Gerät und Passwort stellen die Erkennungsinformation dar, aufgrund der eine Autorisierung durch das Autorisierungssystem 2 durchführbar ist. Der Status AUTORISIERT und der Status VERBUNDEN werden vom Autorisierungssystem 2 vergeben. Wie in der Fig.2 dargestellt, ist das Gerät Telefonhörer bereits autorisiert und verbunden mit dem Datenbus 1. Das Gerät Kopfhörer ist bereits autorisiert, aber eine Verbindung kann momentan nicht hergestellt werden, da dieses Gerät beispielsweise nicht eingeschalten ist. Das Gerät Laptop erscheint auf der Liste, da dieses Gerät bereits Erkennungsinformationen an die Kommunikationsschnittstelle 4 gesendet hat, es also erreichbar und zur Autorisierung bereit ist. Dem Autorisierungssystem 2 sind jedoch noch keine Erkennungsinformationen bekannt gemacht worden und konnte damit auch noch keine Autorisierung vornehmen. Dementsprechend kann das Gerät Laptop auch nicht mit dem Datenbus 1 verbunden sein.

In Fig. 3 ist ein Beispiel zur weiteren Individualisierung der Daten in der Geräteliste dargestellt. Dies kann notwendig sein, sofern sich mehrere Geräte 5, 6 mit demselben Gerätenamen verbinden möchten und eine Individualisierung aufgrund des Gerätenamens nicht mehr ausreicht. Beispielsweise ist das Gerät mit dem Gerätenamen Telefonhörer durch Definition weiterer Merkmale wie Geräteadresse, wobei hier die Hardware-Adresse des Geräts herangezogen wurde oder Angabe einer Geräteklasse, hier drahtloses Telefon, individualisiert worden. Diese Angaben müssen über die Benutzerschnittstelle 3 dem Autorisierungssystem 2 bekannt gemacht werden, damit diese Angaben in der Geräteliste gespeichert werden.

## Patentansprüche

1. Verfahren zur Autorisierung von wahlweise an einen Datenbus (1) anschließbaren, externen Geräten (5, 6) in einem Verkehrsmittel, wobei Daten zwischen einem Gerät (5, 6) und dem Datenbus (1) über eine Kommunikationsschnittstelle (4) und/oder umgekehrt ausgetauscht werden, wobei über eine Schnittstelle des Datenbusses (1) diesem Erkennungsinformationen für externe Geräte (5, 6) zugewiesen werden, diese Erkennungsinformationen einem dem Datenbus (1) zugeordneten Autorisierungssystem (2) weitergeleitet werden, aus den vom externen Gerät (5, 6) über die Kommunikationsschnittstelle (4) an den Datenbus (1) übertragenen Daten Erkennungsinformationen des externen Geräts (5, 6) extrahiert werden und das Autorisierungssystem (2) aufgrund der ihm über die Schnittstelle vom Datenbus (1) bekannt gemachten Erkennungsinformationen und den vom Gerät (5, 6) übertragenen Erkennungsinformationen überprüft, ob eine Kommunikation zwischen dem Datenbus (1) und dem wahlweise ankoppelbaren Gerät (5, 6) zu Stande kommen soll,
**dadurch gekennzeichnet,**
- **dass** das Ergebnis der Prüfung als Autorisierungsinformation bereitgestellt wird,
- **dass** Steuerinformationen für die extefnen Geräte (5, 6) vom Benutzer über eine Benutzerschnittstelle (3) eingegeben werden und
- **dass** zusätzlich Erkennungsinformationen zur Autorisierung der extern, ankoppelbaren Geräte (5, 6) mittels der Benutzerschnittstelle (3) eingegeben werden.

2. Verfahren nach Anspruch 1,
**dadurch gekennzeichnet,**
- **dass** das Autorisierungssystem (2) bei positiver Autorisierungsinformation mittels der Kommunikationsschnittstelle (4) die Kommunikation zum extern ankoppelbaren Gerät (5, 6) zulässt, so dass an den Datenbus (1) angebundenen Komponenten (4,8) über den Datenbus (1) Daten mit dem externen Gerät (5, 6) austauscht.

3. Verfahren nach Anspruch 1 oder 2,
**dadurch gekennzeichnet,**
**dass** das Autorisierungssystem (2) den Status der Kommunikation als Verbindungsinformation bereitstellt.

4. Verfahren nach einem der Ansprüche 1 bis 3,
**dadurch gekennzeichnet,**
**dass** die Erkennungsinformationen, die Autorisierungsinformationen und die Verbindungsinformationen der externen Geräte (5, 6) von einem dem Datenbus (1) zugeordneten Autorisierungssystem (2) gespeichert und bei Änderungen aktualisiert werden.

5. Verfahren nach Anspruch 1,
**dadurch gekennzeichnet,**
**dass** das Autorisierungssystem (2) bei Änderung der Erkennungsinformation für externe Geräte (5, 6) eine erneute Überprüfung der Autorisierung durchführt.

6. Verfahren nach einem der vorhergehenden Ansprüche,
**dadurch gekennzeichnet,**
**dass** die Ankopplung des externen Geräts (5, 6) an die Kommunikationsschnittstelle (4) über eine drahtlose Datenübertragung (7) erfolgt.

7. Verfahren nach Ansprüche 1 oder 2,
**dadurch gekennzeichnet,**
**dass** die Datenübertragung zwischen den externen Geräten (5, 6) und der Kommunikationsschnittstelle (4) verschlüsselt erfolgt.

8. Datenbus in einem Verkehrsmittel mit mindestens einer mit einem Mikrorechner versehenen Komponente (2, 8), an die über eine Schnittstelle Autorisierungsinformation übertragbar ist und die ein Speichermittel (9, 10) zur Ablage der Autorisierungsdaten aufweist, und mit einer Kommunikationsschnittstelle (4), über die Daten von einem wahlweise mit dem Datenbus (1) verbindbaren, externen Gerät (5, 6) übertragbar sind, wobei der Datenbus (1) ein Autorisierungssystem (2) aufweist, welches aufgrund der im Speichermittel (9, 10) abgelegten Erkennungsinformation für externen Geräte (5, 6) und den von den externen Geräten (5, 6) übertragenen Erkennungsinformationen auswertet, ob eine Datenkommunikation zu Stande kommen soll,
**dadurch gekennzeichnet,**
**dass** die Schnittstelle als eine vom Benutzer bedienbare Benutzerschnittstelle (3) zur Ein- und Ausgabe von Steuerinformationen und zur Eingabe von Erkennungsinformationen zur Autorisierung der extern, ankoppelbare Geräte (5, 6), ausgebildet ist.

9. Datenbus (1) nach Anspruch 8,
**dadurch gekennzeichnet,**
**dass** das Autorisierungssystem (2) in Abhängigkeit der Auswertung der Erkennungsinformationen mittels der Kommunikationsschnittstelle (4) die Verbindung zu den externen Geräten (5, 6) aufbaut oder beendet.

10. Datenbus (1) nach Anspruch 8 oder 9,
**dadurch gekennzeichnet,**
**dass** ein Vergleichsmittel vorgesehen ist, welches die von einem externen Gerät (5, 6) an die Kommunikationsschnittstelle (4) übertragene Erkennungsinformation, insbesondere ein Passwort,
mit der in einem Speichermittel (9, 10) abgelegten Erkennungsinformation, insbesondere mit dem Passwort für das externe Gerät, vergleicht und bei Übereinstimmung die Verbindung autorisiert.

11. Datenbus (1) nach Anspruch 8 bis 10,
**dadurch gekennzeichnet,**
**dass** die Benutzerschnittstelle (3) Statusinformationen bezüglich der Autorisierung und der Verbindung zu den externen Geräten (5, 6) anzeigt.

## Claims

1. Method for authorising external devices (5, 6) that can optionally be connected to a data-bus (1) in a vehicle, in which method data are exchanged between a device (5, 6) and the data-bus (1) and/or vice-versa via a communication interface (4), such that via an interface of the data-bus (1) recognition information for external devices (5, 6) is transmitted to the data-bus, the said recognition information is passed on to an authorisation system (2) associated with the data-bus (1), from the data transmitted by the external device (5, 6) via the communication interface (4) to the data-bus (1) recognition information of the external device (5, 6) is extracted, and on the basis of the recognition information notified to it via the interface by the data-bus (1) and the recognition information transmitted by the device (5, 6), the authorisation system (2) tests whether communication between the data-bus (1) and the device (5, 6) that can optionally be coupled thereto should take place,
**characterised in that**
- the result of the test is provided as authorisation information,
- control information for the external device (5, 6) is input by the user via a user interface (3), and
- in addition, recognition information for authorising the external devices (5, 6) that can be connected, is input via the user interface (3).

2. Method according to Claim 1,
**characterised in that**
- when positive authorisation information is received, the authorisation system (2) permits communication with the external device (5, 6) that can be connected via the communication interface (4), so that components (4, 8) connected to the data-bus (1) exchange data with the external device (5, 6) via the data-bus (1).

3. Method according to Claims 1 or 2,
**characterised in that**
the authorisation system (2) provides the status of communication as connection information.

4. Method according to any of Claims 1 to 3,
**characterised in that**
the recognition information, the authorisation information and the connection information pertaining tot he external device (5, 6) are stored by an authorisation system (2) associated with the data-bus (1) and are updated when changed.

5. Method according to Claim 1,
**characterised in that**
when the recognition information for external devices (5, 6) is changed, the authorisation system (2) carries out a new authorisation test.

6. Method according to any of the preceding claims,
**characterised in that**
the connection of the external device (5, 6) to the communication interface (4) takes place via wireless data transmission means (7).

7. Method according to Claims 1 or 2,
**characterised in that**
the data transfer between the external devices (5, 6) and the communication interface (4) is encoded.

8. Data-bus in a vehicle, having at least one component (2, 8) provided with a microcomputer, to which authorisation information can be transmitted via an interface and which comprises storage means (9, 10) for storing the said authorisation data, and having a communication interface (4) via which data from an external device (5, 6) that can optionally be connected to the data-bus (1) can be transmitted, the data-bus (1) comprising an authorisation system (2) which, on the basis of recognition information pertaining to external devices (5, 6) stored therein and recognition information transmitted from the said external devices (5, 6), evaluates whether data communication should take place,
**characterised in that**
the interface is made as a user interface (3) that can be operated by the user for the input and output of control information and for the input of recognition information for authorising the external device (5, 6) that can be connected.

9. Data-bus (1) according to Claim 8,
**characterised in that**
depending on the evaluation of the recognition information, the authorisation system (2) establishes or terminates connection to the external devices (5, 6) via the communication interface (4).

10. Data-bus (1) according to Claims 8 or 9,
**characterised in that**
means of comparison are provided, which compare the recognition information, in particular a password, transmitted by an external device (5, 6) to the communication interface (4), against the recognition information stored in a storage means (9, 10), in particular the password for the external device, and authorises connection in the case of agreement.

11. Data-bus (1) according to Claims 8 to 10,
**characterised in that**
the user interface (3) displays status information relating to the authorisation of the external devices (5, 6) and connection thereto.

## Revendications

1. Procédé d'autorisation de dispositifs externes (5, 6) placés dans un moyen de transport et pouvant être connectés sélectivement à un bus de données (1), où des données peuvent être échangées entre un dispositif (5, 6) et le bus de données (1), via une interface de communication (4) et/ou inversement, où des informations d'identification pour des dispositifs externes (5, 6) sont affectées au bus de données, via une interface du bus de données (1), ces informations d'identification sont transmises à un système d'autorisation (2) associé au bus de données (1), des informations d'identification du dispositif externe (5, 6) sont extraites des données transmises au bus de données (1) par le dispositif externe (5, 6), via l'interface de communication (4), et le système d'autorisation (2), suite aux informations d'identification qui lui sont fournies via l'interface du bus de données (1) et, suite aux informations d'identification transmises par le dispositif (5, 6), contrôle le fait de savoir si une communication doit avoir lieu entre le bus de données (1) et le dispositif (5, 6) pouvant être couple sélectivement,
**caractérisé**
- **en ce que** le résultat du contrôle est fourni comme information d'autorisation,
- **en ce que** des informations de commande pour les dispositifs externes (5, 6) sont entrées par l'utilisateur, via une interface utilisateur (3), et
- **en ce que** des informations d'identification, pour l'autorisation des dispositifs externes (5, 6) pouvant être couplés sont entrées de façon supplémentaire, au moyen de l'interface utilisateur (3).

2. Procédé selon la revendication 1, **caractérisé en ce que** le système d'autorisation (2), dans le cas d'une information d'autorisation positive, permet, via l'interface de communication (4), la communication avec le dispositif (5, 6) pouvant être couplé de manière externe, de sorte que des composants (4, 8) connectés au bus de données (1) échangent des données avec le dispositif externe (5, 6), via le bus de données (1).

3. Procédé selon la revendication 1 ou 2, **caractérisé en ce que** le système d'autorisation (2) fournit l'état de la communication comme information de liaison.

4. Procédé selon l'une quelconque des revendications 1 à 3, **caractérisé en ce que** les informations d'identification, les informations d'autorisation et les informations de liaison des dispositifs externes (5, 6) sont stockées dans la mémoire d'un système d'autorisation (2) associé au bus de données (1) et actualisées en cas de modifications.

5. Procédé selon la revendication 1, **caractérisé en ce que** le système d'autorisation (2), en cas de modification de l'information d'identification pour des dispositifs externes (5, 6), effectue un nouveau contrôle de l'autorisation.

6. Procédé selon l'une quelconque des revendications précédentes, **caractérisé en ce que** le couplage du dispositif externe (5, 6) à l'interface de communication (4) a lieu via une transmission de données (7) sans fil.

7. Procédé selon la revendication 1 ou 2, **caractérisé en ce que** la transmission de données entre les dispositifs externes (5, 6) et l'interface de communication (4) a lieu de façon codée.

8. Bus de données placé dans un moyen de transport, comprenant au moins un composant (2, 8) doté d'un microcalculateur, composant auquel peut être transmis une information d'autorisation, via une interface, et qui présente un moyen de mémorisation (9, 10) servant au stockage des données d'autorisation, et comprenant une interface de communication (4) via laquelle des données peuvent être transmises par un dispositif externe (5, 6) pouvant être connecté sélectivement au bus de données (1), où le bus de données (1) présente un système d'autorisation (2) qui, suite à l'information d'identification pour des dispositifs externes (5, 6), stockée dans le moyen de mémorisation (9, 10) et, suite aux informations d'identification transmises par les dispositifs externes (5, 6), analyse le fait de savoir si une communication de données doit avoir lieu,
**caractérisé**
**en ce que** l'interface est configurée comme une interface utilisateur (3) utilisable par l'utilisateur, pour l'entrée et la sortie d'informations de commande et pour l'entrée d'informations d'identification servant à l'autorisation des dispositifs externes (5, 6) pouvant être couplés.

9. Bus de données (1) selon la revendication 8, **caractérisé en ce que** le système d'autorisation (2), en fonction de l'analyse des informations d'identification, établit ou achève, au moyen de l'interface de communication (4), la liaison avec les dispositifs externes (5, 6).

10. Bus de données (1) selon la revendication 8 ou 9, **caractérisé en ce qu'**il est prévu un moyen de comparaison qui compare l'information d'identification - en particulier un mot de passe - transmise à l'interface de communication (4) par un dispositif externe (5, 6), à l'information d'identification - en particulier au mot de passe pour le dispositif externe - stockée dans un moyen de mémorisation (9, 10) et, en cas de concordance, autorise la liaison.

11. Bus de données (1) selon l'une quelconque des revendications 8 à 10, **caractérisé en ce que** l'interface utilisateur (3) indique des informations d'état concernant l'autorisation et la liaison avec les dispositifs externes (5, 6).
